Europäisches Patentamt

European Patent Office

Office européen des brevets

(19)

(11) Veröffentlichungsnummer: **0 005 202**
**B2**

(12) **NEUE EUROPÄISCHE PATENTSCHRIFT**

(45) Veröffentlichungstag der neuen Patentschrift:
23.01.91

(51) Int. Cl.⁵: **C 08 L 55/02, C 08 L 69/00**

(21) Anmeldenummer: 79101151.3

(22) Anmeldetag: 17.04.79

(54) Thermoplastische Formmassen.

(30) Priorität: 27.04.78 DE 2818679

(43) Veröffentlichungstag der Anmeldung:
14.11.79 Patentblatt 79/23

(45) Bekanntmachung des Hinweises auf die
Patenterteilung:
07.04.82 Patenblatt 82/14

(45) Bekanntmachung des Hinweises auf die
Entscheidung über den Einspruch:
23.01.91 Patentblatt 91/04

(84) Benannte Vertragsstaaten:
BE DE FR GB IT NL

(56) Entgegenhaltungen:
DE-A-2 329 585
FR-A-2 249 123
US-A-3 928 494
US-A-4 009 226

(73) Patentinhaber: BAYER AG
D-5090 Leverkusen 1 Bayerwerk (DE)

(72) Erfinder: Margotte, Dieter, Dr.
Wedelstrasse 48
D-4150 Krefeld 1 (DE)
Erfinder: Nouvertné, Werner, Dr.
Scheiblerstrasse 95
D-4150 Krefeld 1 (DE)
Erfinder: Tacke, Peter, Dr.
Brandenburger Strasse 12
D-4150 Krefeld (DE)
Erfinder: Humme, Gert, Dr.
Ackerstrasse 17
D-5068 Odenthal (DE)

## Beschreibung

Aus der DE—AS 1 170 141 sind Mischungen aus 90—30 Gew.-% eines Polycarbonats aus Basis aromatischer Dihydroxyververbindungen und 10 bis 70 Gew.-% eines Pfropfpolymerisats, das aus Polybutadien und einer Mischung aus Acrylnitril und einem aromatischen Vinylkohlenwasserstoff hergestellt worden ist, bekannt. Diese Formmassen zeichnen sich durch eine gute Verarbeitbarkeit aus. Für eine Reihe von technischen Einsatzgebieten reicht die Festigkeit der Zusammenfließnähte allerdings nicht aus. In der DE—OS 2 259 565 sind spezielle Mischungen aus aromatischen Polycarbonaten und ABS—Polymerisaten beschrieben, in denen die Festigkeit in der Zusammenfließnaht erheblich verbessert ist.

Da diese Formmassen bei tiefen Temperaturen ihre Schalgzähigkeit verlieren und splittrig brechen, sind sie z.B. im Automobilbau trotz ihrer sonst guten Eigenschaften kaum zu verwenden. Dort wird Bruchfestigkeit oder jedenfalls splitterfreier Bruch auch bei −30°C verlangt.

Der Erfindung liegt die Erkenntnis zugrunde, daß eine Kombination von 2 ABS—Pfropfmischpolymerisaten dieses Tieftemperaturbruchverhalten entscheidend verbessert.

Gegenstand der Erfindung sind somit thermoplastische Formmassen aus:

1. 70—30 Gew.-Tln eines thermoplastichen Polycarbonats auf Basis von Bisphenol A und
2. 30—70 Gew.-Tln eines Gemisches aus

25—100 Gew.-% Pfropfmischpolymerisaten aus auf einen Kautschuk polymerisierten Monomeren und 0—75 Gew.-% eines Copolymerisats von 95—50 Gew.-% Styrol, α-Methylstyrol, Methylmethacrylat oder Mischungen daraus und 50—5 Gew.-% Acrylnitril, Methacrylnitril, Methylmethacrylat oder Mischungen daraus, die dadurch gekennzeichnet sind, daß als Pfropfmischpolymerisate eine Mischung aus

a) einem Pfropfmischpolymerisat von 50—95, vorzugsweise 50—70 Gew.-% eines Gemisches der Monomeren Styrol und Acrylnitril im Gewichtsverhältnis 50:50 bis 95:5 die auf 5—50, bevorzugt 30—50 Gew.-% eines Polybutadien-Kautschuks bei einer mittleren Teilchengrößen von 0,1 bis 2, vorzugsweise 0,3 bis 1 µm, und einem Pfropfgrad von 0,2—0,5 aufgepfropft sind, und

b) einem Pfropfmischpolymerisat von 40—10, bevorzugt 35 bis 20 Gew.-% eines Gemisches der Monomeren Styrol und Acrylnitril im Gewichtsverhältnis 50:50 bis 95:5, und 60—90, bevorzugt 65—80 Gew.-% eines Polybutadien-Kautschuks bei einer mittleren Teilchengröße von 0,1—2 µm, bevorzugt 0,3—1 µm, und einem Pfropfgrad von 0,7—0,9

eingesetzt wird, wobei die Formmassen die Pfropfmischpolymerisate a) und b) im Gewichtsverhältnis 1:3 bis 3:1 enthalten und ihr Kautschukgehalt 10—25, bevorzugt 15—20 Gew.-% beträgt.

Die erfindungsgemäßen Formmassen besitzen im Vergleich zu den bekannten Legierungen aus aromatischen Polycarbonaten und ABS-Polymerisaten verbesserte Zähigkeit und verringerte Splitterbruchneigung bei tiefen Temperaturen. Die Fließnahtfestigkeit ist unverändert gut. Erstaunlicherweise wird die Wärmeformbeständigkeit, gemessen nach Vicat B, entgegen der Erwartung mit zunehmendem Kautschukgehalt nur unwesentlich reduziert.

Für die erfindungsgemäßen Formmassen werden thermoplastische Polycarbonate auf Basis von 4,4'-Dihydroxyphenylpropan-2,2 (Bisphenol A) verwendet. Diese Polycarbonate sind bekannt. Sie werden durch Umsetzung von Bisphenol A mit Phosgen nach den bekannten Phasengrenzflächenverfahren hergestellt.

Außer Polycarbonaten, die unter Verwendung von Bisphenol A allein hergestellt worden sind, können auch verzweigte Polycarbonate verwendet werden. Zu ihrer Herstellung wird ein Teil der Dihydroxyverbindung, z.B. 0,2—2 Molprozent, durch eine Polyhydroxyverbindung ersetzt. Geeignete Polyhydroxyverbindungen sind z.B. 1,4-Bis-(4',4,2'-dihydroxytriphenyl-methyl)-benzol, Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-äthan und 2.2-Bis-[4,4-(4,4'-dihydroxy-diphenyl)-cyclohexyl]-propan, Isatinbisphenol, Isatinbiskresol.

Polycarbonate dieser Art sind z.B. in den US—Patentschriften 3 028 365; 2 999 835; 3 148 172; 3 271 368; 2 970 137; 2 991 273; 3 271 367; 3 280 078; 3 014 891 und 2 999 846 beschrieben. Bevorzugt haben die Polycarbonate Molekulargewichte von 10 000 bis 60 000, insbesondere von 20 000 bis 40 000.

Die Pfropfpolymerisat a) und b) sind prinzipiell bekannt. Sie können z.B. hergestellt werden durch Emulsionspolymerisation der Pfropfmonomeren mit Hilfe von radikalischen Initiatoren in einem Polybutadien-Kautschuklatex. Die Kautschuk-Teilchen in diesem Latex haben bevorzugt mittlere Durchmesser von 0,3—1 µm. Durch das Pfropfpolymerisieren der Monomeren werden diese Teilchen nicht wesentlich vergrößert, so daß auch die Teilchen des Pfropfmischpolymerisats die angegebene Größe haben. Teilchengröße und Teilchendurchmessser bedeutet immer den mittleren Durchmesser $d_{50}$, d.h. den Durchmesser, oberhalb und unterhalb dessen die Durchmesser von jeweils 50% der betrachteten Teilchen liegen. Pfropfgrad ist das Verhältnis von pfropfpolymerisierten (=chemisch an den Kautschuk gebundenen) Monomeren zu der Gesamtmenge der polymerisierten Monomeren.

Als Pfropfbasis geeignete Kautschuke sind:

Polybutadien; Butadien/Styrol-Copolymerisate mit bis zu 30 Gew.-% anpolymerisiertem Styrol; Copolymerisate von Butadien und Acrylnitril mit bis zu 20 Gew.-% Acrylnitril und Copolymerisate von

# EP 0 005 202 B2

Butadien mit bis zu 20 Gew.-% eines niederen Alkylesters der Acryl- oder Methacrylsäure (z.B. Methylacrylat, Ethylacrylat, Methylmethacrylat und Ethylmethacrylat).

Neben den Pfropfpolymerisaten kann die Formmasse auch ein Copolymerisat aus den Pfropfmonomeren enthalten. Solche Copolymeren entstehen häufig bei der Pfropfpolymerisation als Nebenprodukte, insbesondere dann, wenn große Mengen Monomerer auf kleine Mengen Kautschuk gepfropft werden. Man kann demnach durch Zumischen solcher Copolymerisate die Eigenschaften des Materials beeinflussen.

Copolymerisate bestehen aus 95—50 Gew.-% Styrol, α-Methylstyrol, Methylmethacrylat oder Mischungen daraus mit 5—50 Gew.-% Acrylnitril, Methacrylnitril, Methylmethacrylat oder Mischungen daraus.

Die Bestandteile der erfindungsgemäßen Formmassen werden im allgemeinen getrennt hergestellt und dann aus bekannten Mischvorrichtungen gemischt. Geeignet sind Mischwalzwerke, Doppelschneckenextruder oder Innenmischer. Im allgemeinen werden die Bestandteile bei diesen Mischvorgängen aufgeschmolzen. Soweit die Bestandteile der Formmasse zunächst als Latices anfallen, ist es natürlich auch möglich, die Latices zu mischen und dann gemeinsam zu fällen. Bei den Mischvorgängen können die üblichen Zuschläge, z.B. Füllstoffe, Glasfasern, Pigmente, Stabilisatoren. Flammschutzmittel, Fließmittel, Gleitmittel, Entformungsmittel, Antistatika zugefügt werden.

Die Formmassen der Erfindung können zur Herstellung von Formkörpern aller Art verwendet werden, insbesondere können sie nach dem Spritzgußverfahren verarbeitet werden. Ihre Hauptanwendung ist da, wo ein gutes Tieftemperaturbruchverhalten gefordert wird, z.B. für Armaturenbretter, Lenksäulenverkleidungen, Lautsprecherabdeckungen und Innenteile aller Art in Kraftfahrzeugen.

## Beispiel 1

### I. *Pfropfpolymerisat mit 50 Gew.-Teilen Kautschuk*

Nach dem Verfahren der Emulsionspolymerisation gemäß den Angaben der Deutschen Auslegeschrift 1 247 665 und 1 269 360 werden 35 Gew.-Teile Styrol und 15 Gew.-Teile Acrylnitril auf 50 Gew.-Teile eines grobteiligen Kautschuks mit einem mittleren Teilchendurchmesser der in Latexform vorliegenden Polybutadienpfropfgrundlage von 0,3—0,4 μ aufgepfropft. (Pfropfgrad 0,5).

### II. *Pfropfpolymerisat mit 80 Gew.-Teilen Kautschuk*

Nach dem Verfahren der Emulsionspolymerisation gemäß den Deutschen Auslegeschriften 1 247 665 und 1 269 360 werden 14 Gew.-Teile Styrol und 6 Gew.-Teile Acrylnitril auf 80 Gew.-Teile eines grobteiligen Kautschuks mit einem mittleren Teilchendurchmesser der in Latex-Form vorliegenden Butadienpfropfgrundlage von 0,3—0,4 μ aufgepfropft (Pfropfgrad 0,8).

### III. *Styrol-Acrylnitril-Copolymerisat*

Nach dem Verfahren der Emulsionspolymerisation werden 72 Gew.-Teile Styrol mit 28 Gew.-Teilen Acrylnitril polymerisiert. Das Copolymerisat hat eine Grenzviskosität von $[\eta] = 80{,}2$ (gemessen in DMF bei 20°C).

### IV. *Aromatisches Polycarbonat*

Nach dem Phasengrenzflächenverfahren wird ein Polycarbonat auf Basis von 4,4'-Dihydroxydiphenylpropan-2.2) hergestellt. Die relative Lösungsviskosität betrug 1,30 (gemessen in Methylenchlorid bei 25°C und einer Konzentration von 5 g/l).

Die Einzelkomponenten werden in Innenknetern bei ca. 260°C vermischt und über eine Walze mit anschließender Bandgranulierung isoliert. Einige charakteristische Compounds sind in der folgenden Tabelle zusammengestellt.

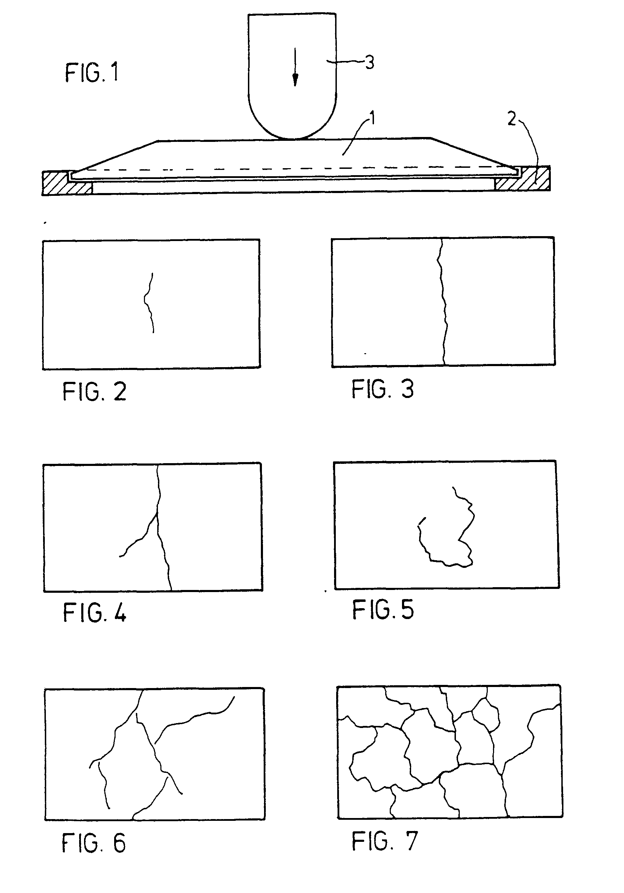

Test zur Bestimmung des Splitterbruchverhaltens bei tiefen Temperaturen: Ein auf Prüftemperatur abgekühlter Formkörper (1) mit den Abmessungen 163 mm breit, 105 mm tief, 20 mm hoch und 3 mm stark, wird in einen Stützrahmen (2) eingelegt, der sich in einer Kältekammer befindet. Auf den Prüfkörper läßt man dann aus einer Höhe von 2 m eine Fallkalotte (3) mit 45 mm Durchmesser und einem Gewicht von 29 kg fallen. Die Festanordnung ist in der Figur 1 schematisch dargestellt, die oben in Klammern eingefügten Ziffern beziehen sich auf diese Figur.

Die Bruchbilder werden visuell begutachtet und wie folgt eingestuft (vergl. Fig. 2—7):

0 keine Beschädigung
1 einfacher Anriß in beliebiger Lage
2 Bruch des Körpers in zwei Teile
3 Bruch in zwei Teile und zusätzlich Anriß
4 Durchstoß durch den Körper
5 Reißbruch in mehrere Bruchstücke, die noch zusammenhängen
6 Splitterbruch in viele, nicht mehr zusammenhängende Teile.

3

# EP 0 005 202 B2

## TABELLE

| Produkt % | Beispiel 1 (vergleich) | 2 | 3 | 4 |
|---|---|---|---|---|
| I | 35,6 | 12,8 | 16,0 | 19,2 |
| II | – | 20,0 | 15,0 | 10,0 |
| III | 14,4 | 7,2 | 9,0 | 20,8 |
| IV | 50,0 | 60,0 | 60,0 | 50,0 |
| % Kautschuk | 17,8 | 22,4 | 20,0 | 17,6 |
| Tieftemp.-Bruchverhalten * | | | | |
| bei    –20°C | 3,2 | 0 | 0 | 2,0 |
| bei    –30°C | 5,0 | 0,8 | 2,6 | 1,8 |
| bei    –40°C | – | 1,6 | 3,0 | 1,6 |
| Vicat B** °C | 117 | 120 | 119 | 116 |

\*)  Durchschnitt aus 5 Prüfkörpern aus der Bruchbildbeurteilung (Fig. 2–7).

\*\*)  DIN 53 460.

## Patentanspruch

Thermoplastische Formmassen aus:
1. 70—30 Gew.-Tln eines thermoplastischen Polycarbonats auf Basis von Bisphenol A und
2. 30—70 Gew.-Tln eines Gemisches aus
25—100 Gew.-% Pfropfmischpolymerisaten aus auf einen Kautschuk polymerisierten Monomeren und
0—75 Gew.-% eines Copolymerisats von 95—50 Gew.-% Styrol, α-Methylstyrol, Methylmethacrylat oder Mischungen daraus und 50—5 Gew.-% Acrylnitril, Methacrylnitril, Methylmethacrylat oder Mischungen daraus,
dadurch gekennzeichnet, daß als Pfropfmischpolymerisate eine Mischung aus
a) einem Pfropfmischpolymerisat von 50—95, vorzugsweise 50—70 Gew.-% eines Gemisches der Monomeren Styrol und Acrylnitril im Gewichtsverhältnis 50:50 bis 95:5 die auf 5—50, bevorzugt 30—50 Gew.-% eines Polybutadien-Kautschuks bei einer mittleren Teilchengröße von 0,1—2, vorzugsweise 0,3 bis 1 µm, und einem Pfropfgrad von 0,2—0,5 aufgepfropft sind, und
b) einem Pfropfmischpolymerisat von 40—10, bevorzugt 35—20 Gew.-% eines Gemisches der Monomeren Styrol und Acrylnitril im Gewichtsverhältnis 50:50 bis 95:5, und 60—90, bevorzugt 65—80 Gew.-% eines Polybutadien-Kautschuks bei einer mittleren Teilchengröße von 0,1—2 µm, bevorzugt 0,3—1 µm, und einem Pfropfgrad von 0,7—0,9
eingesetzt wird, wobei die Formmasse die Pfropfmischpolymerisate a) und b) im Gewichtsverhältnis 1:3 bis 3:1 enthalt, und ihr Kautschukgehalt 10—25, bevorzugt 15 bis 20 Gew.-% ist.

## Revendication

Masse de moulage thermoplastiques à partir de
1. 70—30 parties en poids d'un polycarbonate thermoplastique à base de bisphénol A et de
2. 30—70 parties en poids d'un mélange de
25—100% en poids de copolymères greffés à partir de monomères polymérisés sur un utchouc et
0—75% en poids d'un copolymère de 95—50% en poids de styrène, α-méthylstyrène, méthacrylate de méthyle ou de mélanges de ceux-ci et de 50—5% en poids d'acrylonitrile, méthacrylonitrile, méthacrylate de méthyle ou de mélanges de ceux-ci,
caractérisées en ce qu'on utilise comme copolymères de greffage un mélange

4

a) d'un copolymère greffé à 50—95, de préférence à 50—70% en poids d'un mélange des monomères styrène et acrylonitrile dans le rapport pondéral 50:50 à 95:5, lesquels sont greffés sur 5—50, de préférence 30—50% en poids d'un caoutchouc de polybutadiène à une dimension moyenne de particule de 0,1—2, de préférence 0,3 à 1 μm et sont greffés avec un degré de greffage de 0,2—0,5, et

b) d'un copolymère greffé à 40—10, de préférence à 35—20% en poids d'un mélange des monomères styrène et acrylonitrile dans la rapport pondéral 50:50 à 95:5, et de 60 à 90, de préférence 65 à 80% en poids d'un caoutchouc de polybutadiène ayant une dimension moyenne de particule de 0,1—2 μm, de préférence de 0,3—1 μm, ayant un degré de greffage de 0,7—0,9,

la masse de moulage contenant les polymères greffés a) et b) dans le rapport pondéral 1:3 à 3:1 et sa teneur en caoutchouc étant de 10—25, de préférence de 15 à 20% en poids.

**Claim**

Thermoplastic moulding compounds of:
1. 70—30 parts by weight of a thermoplastic polycarbonate based on bisphenol A and
2. 30—70 parts by weight of a mixture of
25—100% by weight of graft copolymers of monomers polymerised on a rubber and
0—75% by weight of a copolymer of from 95 to 50% by weight of styrene, α-methylstyrene, methylmethacrylate or mixtures thereof and from 50 to 5% by weight of acrylonitrile, methacrylonitrile, methylmethacrylate or mixtures thereof,
characterised in that the graft copolymers used are a mixture of
a) a graft copolymer of from 50 to 95% by weight, preferably from 50 to 70% by weight of a mixture of the monomers styrene and acrylonitrile in proportions by weight of from 50:50 to 95:5, which are grafted on from 5 to 50% by weight, preferably from 30 to 50% by weight of a polybutadiene rubber having an average particle size of from 0.1 to 2 μm, preferably from 0.3 to 1 μm, with a degree of grafting of from 0.2 to 0.5, and
b) a graft copolymer of from 40 to 10% by weight, preferably from 35 to 20% by weight of a mixture of the monomers styrene and acrylonitrile, in proportions by weight of from 50:50 to 95:5, and from 60 to 90% by weight, preferably from 65 to 80% by weight of a polybutadiene rubber having an average particle size of from 0.1 to 2 μm, preferably from 0.3 to 1 μm, with a degree of grafting of from 0.7 to 0.9,
the moulding compound containing the graft copolymers a) and b) in proportions by weight of from 1:3 to 3:1, and having a rubber content of from 10 to 25% by weight, preferably from 15 to 20% by weight.

FIG.1

FIG. 2

FIG. 3

FIG. 4

FIG.5

FIG. 6

FIG. 7